# EUROPEAN PATENT SPECIFICATION

(11) **EP 4 418 443 B1**
(45) Date of publication and mention of the grant of the patent: **28.01.2026**
(21) Application number: 23864150.0
(22) Date of filing: 07.08.2023
(51) Int. Cl.: H01M 50/60, H01M 50/636, H01M 10/6567, H01M 10/613, H01M 10/42, A62D 1/00, A62C 3/16, H01M 50/204, H01M 50/249, H01M 10/625, H01M 10/647, H01M 10/6568, H01M 50/211, H01M 50/293, H01M 50/533, H01M 50/536, H01M 50/569, H01M 10/6556

(54) **IMMERSION-COOLED BATTERY MODULE, AND BATTERY PACK AND VEHICLE COMPRISING SAME**
TAUCHGEKÜHLTES BATTERIEMODUL SOWIE BATTERIEPACK UND FAHRZEUG DAMIT
MODULE DE BATTERIE REFROIDI PAR IMMERSION, ET BLOC-BATTERIE ET VÉHICULE LE COMPRENANT

(30) Priority: 26.12.2022 KR 20220185077; 20.01.2023 KR 20230008988
(43) Date of publication of application: 21.08.2024
(73) Proprietor: LG ENERGY SOLUTION, LTD., Seoul 07335 (KR)
(72) Inventor: LEE, Jung-Hoon, Daejeon 34122 (KR); KIM, Doo-Seung, Daejeon 34122 (KR); UM, Tae-Ki, Daejeon 34122 (KR); RYU, Jae-Uk, Daejeon 34122 (KR)
(74) Representative: Plasseraud IP
(86) International application number: PCT/KR2023/011612
(87) International publication number: WO 2024/143745

(56) References cited:
- EP-A1- 4 395 015
- WO-A1-2022/189295
- WO-A1-2022/237986
- WO-A2-2020/214388
- JP-A- 2021 190 233
- KR-A- 20180 017 695
- KR-A- 20220 066 699
- KR-A- 20220 157 263
- US-A1- 2015 188 203
- US-A1- 2020 266 403
- US-A1- 2022 024 349

## Description

### TECHNICAL FIELD

The present application claims priority to Korean Patent Application No. 10-2022-0185077 filed on December 26, 2022 and Korean Patent Application No. 10-2023-0008988 filed on January 20, 2023.

The present invention relates to a battery module, and a battery pack and a vehicle including the same, and more specifically, to a battery module having a plurality of battery cells that can be charged and discharged, and a battery pack and a vehicle including such a battery module.

### BACKGROUND ART

In general, a secondary battery refers to a battery that can be repeatedly charged and discharged, such as a lithium-ion battery, a lithium polymer battery, a nickel cadmium battery, a nickel hydrogen battery, a nickel zinc battery, and the like. A battery cell, which is the most basic secondary battery, may provide an output voltage of approximately 2.5 V to 4.2 V.

Recently, as this secondary battery has been applied to devices or systems that require high output voltage and large charging capacity, such as an electric vehicle or an energy storage system (ESS), a battery module in which multiple battery cells are densely placed in a limited space and connected in series, parallel, or a combination of series and parallel, or a battery pack in which these battery modules are densely placed again and connected in series, parallel, or a combination of series and parallel is widely used. In order for such a battery module or battery pack in which a large number of battery cells are densely placed in a limited space to operate normally, the temperature of the battery cells should be properly maintained.

However, as disclosed in Korean Patent Publication No. 10-2019-0053574, the existing technology cools the battery cells using a heat sink 300 that contacts only the lower edge portion of the battery cells. Therefore, such existing technology has problems of poor cooling performance for battery cells and difficulty in preventing thermal runaway occurring in the battery cells. In addition, since such existing technology cannot control fires generated in the event of thermal runaway of a battery cell, there is a problem of difficulty in preventing a series of thermal runaway of other battery cells or other battery modules around the battery cell in which thermal runaway occurred.

In addition, as disclosed in Korean Patent Publication No. 10-2021-0048855, the existing technology for cooling the battery cells embedded in a battery module using insulating oil provides cases 200, 300 that accommodates the battery cell stack 100 for each battery cell stack, and the insulating oil is supplied and discharged through independent pipes 500, 600, 700 for each case 200, 300. Therefore, such existing technology requires a lot of space to install insulating oil pipes, and as a result, there are problems of not only increasing the manufacturing cost of the battery pack including the corresponding battery module, but also reducing energy density due to the increase in the overall volume and weight of the battery pack.

Document EP 4 395 015 A1 relates to an immersion-cooled battery module cooling battery cells that can be charged and discharged by direct contact with a cooling liquid. Document US 2020/266403 A1 relates to fluid-cooled battery systems for electric vehicles such as electric cars, and in particular to fluid-cooled battery modules for such battery systems.

### INVENTION

### Technical Problem

The present invention is designed to solve the problems of the related art, and therefore the present invention is directed to providing an immersion-cooled battery module that improves the cooling performance of the battery module to prevent thermal runaway or a series of thermal runaway of the battery cells included in the battery module, and a battery pack and a vehicle including the same.

The present invention is also directed to providing an immersion-cooled battery module capable of improving energy density by minimizing the increase in volume and weight of the battery module, and a battery pack and a vehicle including the same.

### Technical Solution

An immersion-cooled battery module according to the present invention includes a battery assembly including a plurality of battery units; a module case extending in a first direction, having an opening at least at one end in the first direction, and accommodating the battery assembly and a cooling liquid in an internal space connected to the opening; and a sealing cover airtightly covering the opening, wherein each of the plurality of battery units includes a plurality of battery cells disposed side by side in the first direction; an insulating block disposed between adjacent battery cells among the plurality of battery cells; and a connection member coupled to the insulating block and electrically connected to electrode leads of the adjacent battery cells.

In an embodiment, each of the adjacent battery cells may be provided with electrode leads at both ends in the first direction.

The plurality of battery units are stacked on each other in a second direction crossing the first direction, with plate-shaped cooling fins or insulating pads interposed therebetween.

In an embodiment, the battery assembly may include a plurality of unit stacks in which two or more battery units among the plurality of battery units are configured to be stacked on each other with the cooling fins interposed therebetween, wherein the plurality of unit stacks may be configured to be stacked on each other with the insulating pads interposed therebetween.

In an embodiment, the insulating block may include a coupling groove configured such that the connection member is inserted and coupled; and a plurality of slots communicating with the internal space of the coupling groove and configured such that electrode leads of the adjacent battery cells are inserted.

In an embodiment, the insulating block may have an opening portion configured to open an internal space of the coupling groove to bring at least a portion of the connection member coupled to the coupling groove into contact with a cooling liquid.

In an embodiment, the insulating block may have a cooling liquid channel provided on one surface in contact with the inner surface of the module case to provide a moving passage for the cooling liquid.

In an embodiment, the battery assembly may include a circuit board configured to sense electrical signals related to battery cells included in the plurality of battery units.

In an embodiment, the insulating block may include a support portion that supports the circuit board so that the circuit board is positioned spaced apart from the battery cells and allows the cooling liquid to move between the circuit board and the battery cells.

In an embodiment, the connection member may include a body portion electrically connected to electrode leads of the adjacent battery cells; and an extension portion that extends from one end of the body portion and is inserted into a via hole provided in the circuit board to be electrically connected to the circuit board.

In an embodiment, the battery assembly may include a pair of side plates each in close contact with both ends in the second direction of the plurality of battery units stacked in the second direction, wherein each of the pair of side plates may include a first opening portion provided at one end in contact with the inner surface of the module case to provide a moving passage for the cooling liquid.

In an embodiment, at least one of the pair of side plates may include a second opening portion that exposes a surface of a battery cell included in an adjacent battery unit among the plurality of battery units to contact a cooling liquid.

In an embodiment, the sealing cover may include at least one of an inlet for introducing a cooling liquid into the internal space and an outlet for discharging the cooling liquid introduced into the internal space to the outside of the module case, and the immersion-cooled battery module may further include an end cover that has a through hole through which the inlet or outlet of the sealing cover passes and is coupled to the opening to cover the opening.

In an embodiment, the cooling liquid may include an insulating oil or a dielectric liquid.

A battery pack according to another aspect of the present disclosure may include an immersion-cooled battery module according to any one of the above-described embodiments.

A vehicle according to still another aspect of the present disclosure may include an immersion-cooled battery module according to any one of the above-described embodiments.

### Advantageous Effects

According to the present disclosure, the battery cells accommodated inside the module case of the battery module may be cooled through direct contact with the cooling liquid introduced into the module case, thereby omitting the battery cell cooling means such as a thermal pad, a heat sink, and the like, improving the battery cell cooling performance, and effectively preventing thermal runaway of the battery cell.

In addition, in the event of a fire caused by thermal runaway of a battery cell, the cooling liquid charged inside the module case may function as a fire extinguishing agent, thereby preventing a series of thermal runaway of other battery cells or other battery modules around the battery cell where thermal runaway occurred.

In addition, a pair of battery cells are disposed side by side in the longitudinal direction of the battery cell with an insulating block interposed therebetween to form a battery unit, a plurality of battery units are stacked in the thickness direction of the battery cell to form a unit stack, and a plurality of unit stacks are stacked again in the thickness direction to form a battery module having a length more than twice as long as that of the corresponding battery cell, thereby reducing the number of battery modules included in the battery pack and smoothly moving the cooling liquid along the longitudinal direction in each battery module. As a result, in a battery pack including multiple battery modules, the space occupied by the inlet and outlet provided for each battery module and the space occupied by the pipes required to supply a cooling liquid to and recover it from each battery module are reduced, so that it may not only reduce the manufacturing cost of the battery pack, but also lower the overall volume and weight of the battery pack and improve the energy density of the battery pack.

In addition, the insulating blocks included in the mutually stacked battery units may be configured to bring the connection member into contact with the cooling liquid while supporting the connection member connected to the electrode lead of the battery cell, thereby increasing the cooling effect on the electrode lead portion of the battery cell having relatively severe heat generation.

In addition, the insulating blocks may have a cooling liquid channel that provides a moving passage for the cooling liquid, thereby facilitating circulation of the cooling liquid and further improving cooling performance for the battery cell.

In addition, one circuit board of the plurality of circuit boards sensing the electrical signals of the battery cells inside the battery module may transmit the electrical signal sensed by itself and the electrical signal sensed by the remaining circuit boards to the outside through one waterproof connector, thereby facilitating the electrical connection between the battery module and external electrical devices and simplifying the wiring structure of the battery pack including multiple battery modules.

In addition, the waterproof connector is coupled to a sealing cover provided with an inlet or outlet and disposed in a space secured to connect the inlet or outlet to the pipe, so that there is no need to secure a separate space to enable the electrical connection work of the waterproof connector within the battery pack, and the electrical connection work of the waterproof connector may be facilitated.

In addition, the inner edge of the end cover is inserted and coupled between the wall portion of the sealing cover and the opening edge of the module case, and the opening edge of the module case is inserted and coupled between the inner edge and the outer edge of the end cover, thereby forming a meander-shaped sealing structure, which may result in minimizing the risk of leakage of the cooling liquid introduced into the battery module.

In addition, the sealing tape, liquid sealant, and structural adhesive applied to the sealing structure may triply block leakage of the cooling liquid, thereby improving the durability and safety of the immersion-cooled battery module.

Furthermore, those skilled in the art to which the present disclosure belongs will easily understand from the following description that various embodiments according to the present disclosure may solve several technical problems not mentioned above.

### DESCRIPTION OF DRAWINGS

FIG. 1 is a perspective view showing an immersion-cooled battery module according to an embodiment of the present disclosure.
FIG. 2 is an exploded perspective view showing the immersion-cooled battery module shown in FIG. 1.
FIG. 3 is a view showing a battery assembly accommodated in a module case of an immersion-cooled battery module according to an embodiment of the present disclosure.
FIG. 4 is a view showing a battery unit included in the battery assembly shown in FIG. 3.
FIG. 5 is a view showing an insulating block and a connection member of the battery unit shown in FIG. 4.
FIG. 6 is a view showing a unit stack including a plurality of battery units.
FIG. 7 is a view showing a battery stack including a plurality of unit stacks.
FIG. 8 is a cross-sectional view taken along line A-A' in FIG. 1.
FIG. 9 is a perspective view showing a first sealing cover of an immersion-cooled battery module according to an embodiment of the present disclosure.
FIG. 10 is a vertical cross-sectional view showing the first sealing cover coupled to the module case.
FIG. 11 is a perspective view showing a first end cover of an immersion-cooled battery module according to an embodiment of the present disclosure.
FIG. 12 is a vertical cross-sectional view taken along line B-B' of the first end cover shown in FIG. 11.
FIG. 13 is a vertical cross-sectional view showing the first end cover coupled to the module case.
FIG. 14 is an enlarged view showing portion M1 of FIG. 13.
FIG. 15 is a view showing a battery pack according to an embodiment of the present disclosure.
FIG. 16 is a view showing a vehicle according to an embodiment of the present disclosure.

### BEST MODE

Hereinafter, embodiments according to the present disclosure will be described in detail with reference to the accompanying drawings in order to clarify solutions corresponding to the technical problems of the present disclosure. However, if the description of related known technology rather obscures the gist of the present disclosure in describing the present disclosure, the description thereof may be omitted.

In addition, the terms used in this specification are terms defined in consideration of functions in the present disclosure, which may vary depending on the intention or custom of the designer, manufacturer, and the like. Therefore, definitions of terms to be described below should be made based on the content throughout this specification.

It should be noted that the components of the present disclosure shown in the accompanying drawings may be partially or entirely reduced, enlarged, omitted, or simplified to facilitate technical understanding.

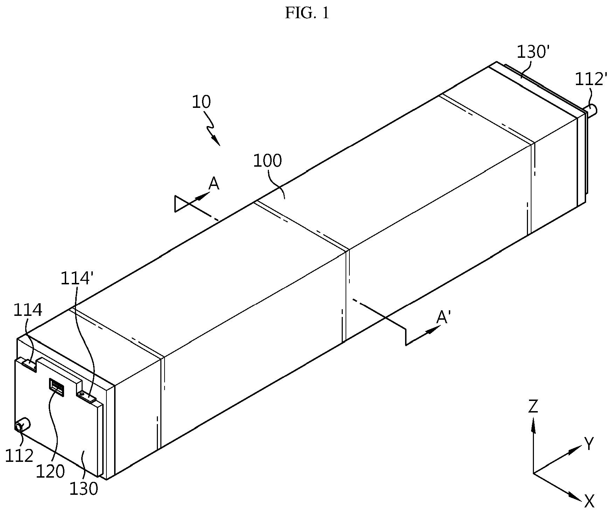

In FIG. 1, an immersion-cooled battery module 10 according to an embodiment of the present disclosure is shown in a perspective view.

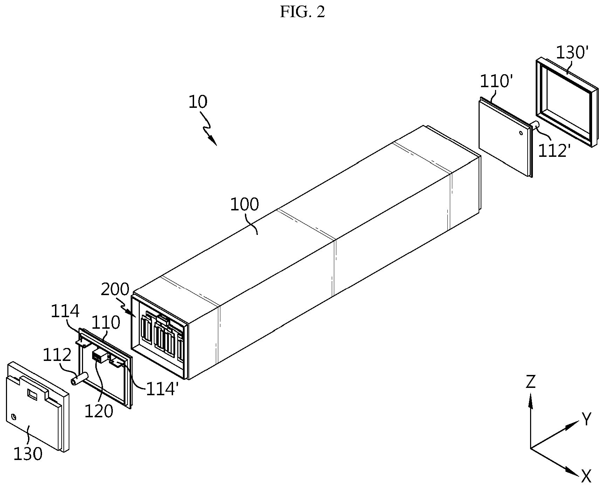

In FIG. 2, the immersion-cooled battery module 10 shown in FIG. 1 is shown in an exploded perspective view.

As shown in FIGS. 1 and 2, the battery module 10 according to an embodiment of the present disclosure is configured to cool the battery cells accommodated in the internal space of the module case 100 by directly contacting them with a cooling liquid. To this end, the battery module 10 may include a module case 100, a battery assembly 200, a sealing cover 110, 110', a waterproof connector 120, and an end cover 130, 130'.

The module case 100 extends in a first direction (Y-axis direction) and has an opening at least at one end in the first direction, and is configured to accommodate the battery assembly 200 and the cooling liquid in an internal space connected to the opening. For example, the module case 100 may be configured in the form of a tube having an internal space extending in the longitudinal direction (Y-axis direction) of the battery module and openings at both ends in the longitudinal direction.

This module case 100 may be made of a metal material having a certain strength. In addition, the module case 100 may be integrally formed through extrusion molding or sheet metal processes to prevent leakage of the cooling liquid.

The battery assembly 200 includes a plurality of battery cells and may be accommodated in the internal space of the module case 100. As will be described again below, this battery assembly 200 may include battery units stacked in the width direction (X-axis direction) of the battery module and a circuit board sensing electrical signals from battery cells included in these battery units.

The sealing covers 110, 110' may be configured to have at least one of an inlet 112 for introducing the cooling liquid into the internal space of the module case 100 and an outlet 112' for discharging the cooling liquid introduced into the internal space to the outside of the module case 100 and to be inserted into the opening of the module case 100 to airtightly cover the corresponding opening.

These sealing covers 110, 110' may include a first sealing cover 110 having an inlet 112 and covering one end opening of the module case 100, and a second sealing cover 110' having an outlet 112' and covering the other end opening of the module case 100. In this case, high voltage (HV) terminals 114, 114' providing an output of the battery module 10 and a waterproof connector 120 may be disposed on the first sealing cover 110.

The waterproof connector 120 is coupled to and supported by the first sealing cover 110, and may be configured to be electrically connected to the circuit boards of the battery assembly 200 to transmit electrical signals sensed by the circuit board to the outside of the module case 100.

The end covers 130, 130' may be configured to be coupled to openings of the module case 100 where the sealing covers 110, 110' are inserted and coupled to cover the openings. These end covers 130, 130' may include a first end cover 130 covering one end opening into which the first sealing cover 110 is inserted and a second end cover 130' covering the other end opening to which the second sealing cover 110' is coupled.

The cooling liquid applied to the present disclosure may include an insulating oil or a dielectric liquid having a high withstand voltage. For example, the cooling liquid may include one or at least two of trioctyl phosphate (TOP), tributyl phosphate (TOB), triphenyl phosphate, trimethyl phosphate, and tripropyl phosphate.

In a modified embodiment, the modified module case accommodating the battery assembly 200 may be configured such that an opening is provided only at one end in the longitudinal direction thereof and the other end in the longitudinal direction thereof is closed. In addition, the modified sealing cover, which covers and seals the opening of the modified module case, may also be configured to have both an inlet and an outlet.

According to this modified embodiment, configurations corresponding to the second sealing cover 110' and the second end cover 130' shown in FIGS. 1 and 2 may be omitted. In this case, the cooling liquid introduced through the inlet of the modified sealing cover may be circulated in the internal space of the modified module case to cool the battery cells, and then be discharged through the outlet of the modified sealing cover.

As such, according to the present disclosure, the battery cells accommodated in the module case 100 of the battery module 10 may be cooled through direct contact with the cooling liquid introduced into the module case 100, thereby omitting the battery cell cooling means such as a thermal pad, a heat sink, or the like, improving the battery cell cooling performance, and effectively preventing thermal runaway of the battery cell.

In addition, in the event of a fire caused by thermal runaway of a battery cell, the cooling liquid charged inside the module case may function as a fire extinguishing agent, thereby preventing a series of thermal runaway of other battery cells or other battery modules around the battery cell where thermal runaway occurred.

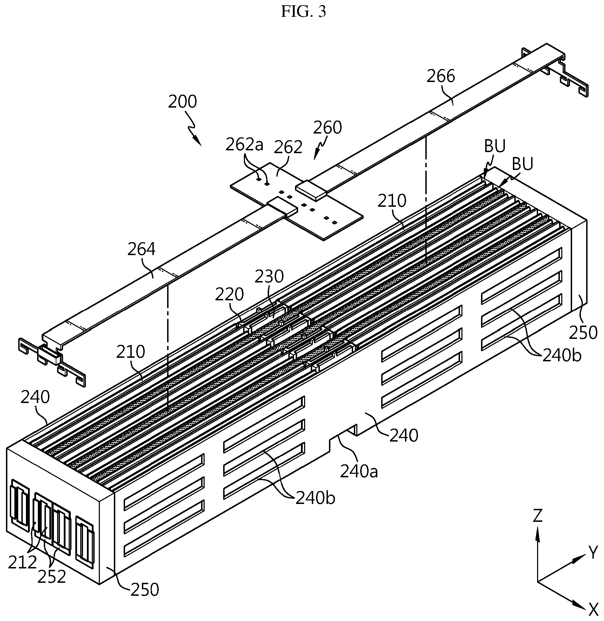

In FIG. 3, a battery assembly 200 accommodated in a module case of an immersion-cooled battery module according to an embodiment of the present disclosure is shown.

As shown in FIG. 3, the battery assembly 200 includes a plurality of battery units (BUs). In addition, each battery unit (BU) may include a plurality of battery cells 210, an insulating block 220, and a connection member 230.

The plurality of battery cells 210 may be disposed side by side in the longitudinal direction (Y-axis direction) of the corresponding battery cell. In addition, each battery cell 210 may have electrode leads 212 at both ends in the longitudinal direction. These battery cells 210 may be implemented as various types of secondary batteries. For example, the battery cell 210 may be implemented as a pouch-type secondary battery, a prismatic secondary battery, or a cylindrical secondary battery.

The insulating block 220 is made of an insulating and heat-resistant material and may be disposed between adjacent battery cells among the plurality of battery cells 210.

The connection member 230 may be configured to be coupled to the insulating block 220 to be electrically connected to electrode leads of the adjacent battery cells, respectively.

As will be described again below, a plurality of battery units (BUs) may be stacked on each other in the thickness direction (X-axis direction) of the battery cell with plate-shaped cooling fins or insulating pads interposed therebetween.

In an embodiment, the battery assembly 200 may include a pair of side plates 240 that are in close contact with both ends of the battery units stacked in the thickness direction (X-axis direction) and support the battery units.

Each side plate 240 may include a first opening portion 240a provided at a lower end in contact with the inner surface (bottom surface) of the module case 100 to provide a moving passage for the cooling liquid. In this case, the first opening portion 240a may include a concave groove formed concavely from the bottom of the corresponding side plate 240 toward the center.

In addition, at least one of the pair of side plates 240 may include a second opening portion 240b that exposes the surface of a battery cell included in an adjacent battery unit among the plurality of battery units (BUs) to contact the cooling liquid. For example, the second opening portion 240b may include a through hole exposing the surface of an adjacent battery cell.

It is a matter of course that the structure and shape of the first opening portion 240a and the second opening portion 240b may be varied depending on embodiments.

In an embodiment, the battery assembly 200 may include a busbar frame 250 disposed respectively at both ends in the longitudinal direction (Y-axis direction) of the battery stack in which a plurality of battery units (BUs) are stacked.

The busbar frame 250 may be configured to support at least one busbar 252 that electrically connects the electrode lead of a battery cell forming a battery unit (BU) to the electrode lead of another battery cell or the terminal of a battery module.

In an embodiment, the battery assembly 200 may include a circuit board 260 disposed on top of the battery units and configured to sense electrical signals related to battery cells included in the corresponding battery units.

In this case, the circuit board 260 may include first to third circuit boards 262, 264, 266.

The first circuit board 262 may be disposed on top of the insulating block 220 and configured to be electrically connected to the connection member 230 coupled to the insulating block 220. To this end, the first circuit board 262 may have a via hole 262a into which an end of the connection member 230 is inserted. The end of the connection member 230 inserted into the via hole 262a may be fixed to the first circuit board 262 by soldering. This first circuit board 262 may include a printed circuit board (PCB).

The second circuit board 264 may be disposed on one side of the first circuit board 262 and configured to sense a first electrical signal related to a first group of battery cells among the battery cells included in the battery assembly 200. The first electrical signal may include an electrical signal indicating the output voltage, output current, or charging state of the first group of battery cells.

The third circuit board 266 may be disposed on the other side of the first circuit board 262 and configured to sense a second electrical signal related to a second group of battery cells among the battery cells included in the battery assembly 200. The second electrical signal may include an electrical signal indicating the output voltage, output current, or charging state of the second group of battery cells.

These second and third circuit boards 264, 266 may include a flexible printed circuit board (FPCB).

In addition, the second circuit board 264 may be configured to collect the first electrical signal and the second electrical signal sensed by the third circuit board 266 and transmit them to the outside through the waterproof connector 120.

In general, the length of the battery module corresponds to the length of the battery cells constituting the battery module. However, since the immersion-cooled battery module 10 according to the present disclosure includes a plurality of battery cells disposed side by side in the longitudinal direction (Y-axis direction), it is more than twice as long as a typical battery module including battery cells of the same size as those in the present disclosure. For example, if a typical battery module is manufactured in a length of about 500 mm to 610 mm, the immersion-cooled battery module 10 according to the present disclosure may be manufactured in a length of 1000 mm or more.

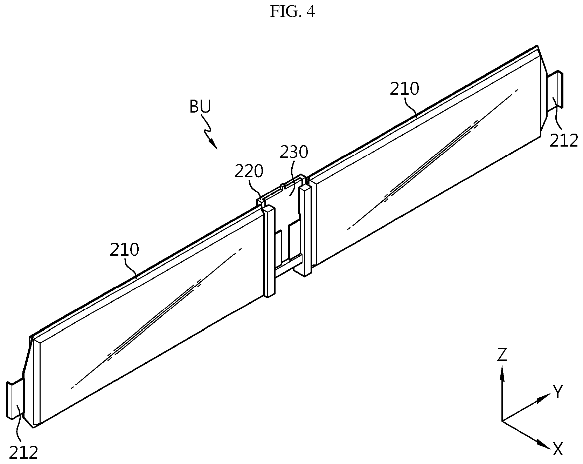

In FIG. 4, a battery unit (BU) included in the battery assembly shown in FIG. 3 is shown.

As shown in FIG. 4, the battery unit (BU) may include a plurality of battery cells 210, an insulating block 220, and a connection member 230.

The plurality of battery cells 210 may be disposed side by side in the longitudinal direction (Y-axis direction) of the corresponding battery cell. In addition, each battery cell 210 may have electrode leads 212 at both ends in the longitudinal direction. These battery cells 210 may be implemented as various types of secondary batteries. For example, the battery cell 210 may be implemented as a pouch-type secondary battery, a prismatic secondary battery, or a cylindrical secondary battery.

FIG. 4 shows that the battery unit (BU) includes a pair of battery cells, but in another embodiment, the battery unit (BU) may be configured to include three or more battery cells disposed side by side in one direction.

The insulating block 220 is made of an insulating and heat-resistant material and may be disposed between adjacent battery cells among the plurality of battery cells 210.

The connection member 230 may be configured to be coupled to the insulating block 220 to be electrically connected to electrode leads of the adjacent battery cells, respectively.

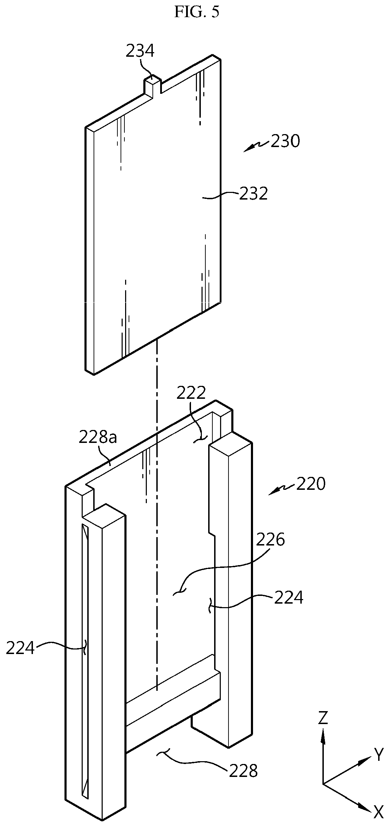

In FIG. 5, an insulating block 220 and a connection member 230 of the battery unit shown in FIG. 4 are shown.

As shown in FIG. 5, the insulating block 220 may have a coupling groove 222 configured such that the connection member 230 is inserted and coupled, and a plurality of slots 224 communicating with the internal space of this coupling groove 222 and configured such that the electrode leads of adjacent battery cells are respectively inserted.

In addition, the insulating block 220 may have an opening portion 226 configured to open the internal space of the coupling groove 222 to bring at least a portion of the connection member 230 coupled to the coupling groove 222 into contact with a cooling liquid.

That is, the connection member 230 may be inserted into and coupled to the coupling groove 222 of the insulating block 220, and the electrode lead 212 of the battery cell 210 may be inserted into the slot 224 of the insulating block 220 to be electrically connected to the connection member 230. In this case, the opening portion 226 of the insulating block 220 may provide a work space required for welding the electrode lead 212 to the connection member 230.

In this way, the insulating block 220 may be configured to bring the connection member 230 into contact with the cooling liquid while supporting the connection member 230 connected to the electrode leads of the battery cells, thereby increasing the cooling effect on the electrode lead portion of the battery cell having relatively severe heat generation.

In an embodiment, the insulating block 220 may have a cooling liquid channel 228 provided on one surface in contact with the inner surface of the module case 100 accommodating the battery assembly 200 to provide a moving passage for the cooling liquid. In this case, the cooling liquid channel 228 may be provided on the bottom surface of the insulating block 220 in contact with the bottom surface of the module case 100. In addition, the cooling liquid channel 228 may be configured to communicate with the opening portion 226.

As a result, the cooling liquid introduced into the opening portion 226 of the insulating block 220 may be quickly moved through the cooling liquid channel 228 after cooling the connection member 230 and the electrode lead 212.

In an embodiment, the insulating block 220 may have a support portion 228a that supports the first circuit board 262 at an upper end thereof. This support portion 228a may support the first circuit board 262 so that the first circuit board 262 is positioned spaced apart from the battery cells and may allow the cooling liquid to move between the first circuit board 262 and the battery cells.

As such, the insulating block 220 may have a cooling liquid channel 228 and a support portion 228a that provide a moving passage for the cooling liquid, thereby facilitating circulation of the cooling liquid and further improving cooling performance for the battery cell.

Meanwhile, the connection member 230 may include a body portion 232 electrically connected to the electrode leads of the battery cells and an extension portion 234 that extends upward (Z-axis direction) from the top of the body portion 232 and is inserted into the via hole 262a provided in the first circuit board 262. The extension portion 234 of the connection member 230 inserted into the via hole 262a may be fixed to the first circuit board 262 by soldering.

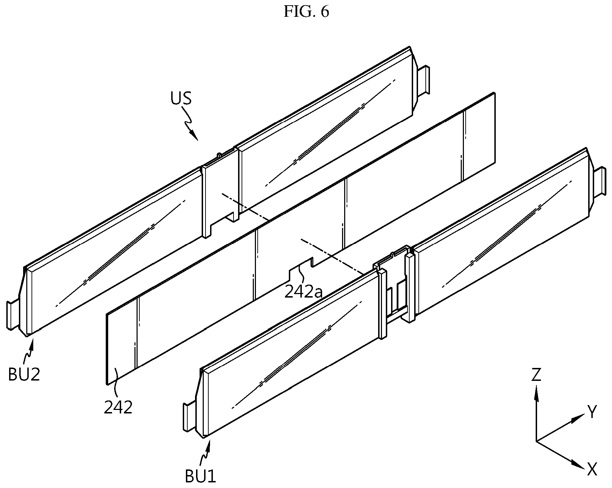

In FIG. 6, a unit stack (US) including a plurality of battery units is shown.

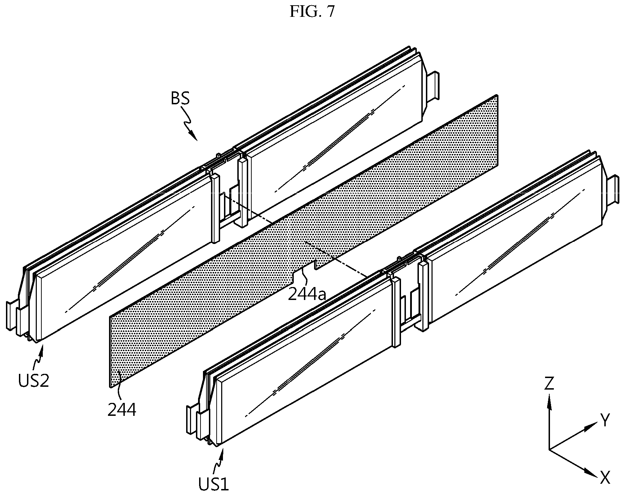

In FIG. 7, a battery stack (BS) including a plurality of unit stacks is shown.

As shown in FIGS. 6 and 7, the battery assembly 200 may include a battery stack (BS) in which a plurality of battery units are stacked on each other in the thickness direction (X-axis direction) of the battery cell with plate-shaped cooling fins 242 or insulating pads 244 interposed therebetween.

First, as shown in FIG. 6, the unit stack (US) may be configured such that two or more battery units (BU1, BU2) are stacked on each other with the cooling fin 242 interposed therebetween.

In this case, the cooling fin 242 may be made of a material having high thermal conductivity. For example, the cooling fin 242 may be made of a metal material. In addition, the cooling fin 242 may include an opening portion 242a provided at a position corresponding to the cooling liquid channel 228 of the above-described insulating block 220 to provide a moving passage for the cooling liquid. In this case, the opening portion 242a may include a concave groove formed concavely from the bottom of the cooling fin 242 in contact with the bottom surface of the module case 100 toward the center.

Next, as shown in FIG. 7, the battery stack (BS) may be configured such that two or more unit stacks (US1, US2) are stacked on each other with the insulating pad 244 interposed therebetween.

In this case, the insulating pad 244 may be made of a material with high insulating properties. For example, the insulating pad 244 may be made of a material including one or at least two of rubber, ceramic, and polymer synthetic resin. In addition, the insulating pad 244 may include an opening portion 244a provided at a position corresponding to the cooling liquid channel 228 of the above-described insulating block 220 to provide a moving passage for the cooling liquid. In this case, the opening portion 244a may include a concave groove formed concavely from the bottom of the insulating pad 244 in contact with the bottom surface of the module case 100 toward the center.

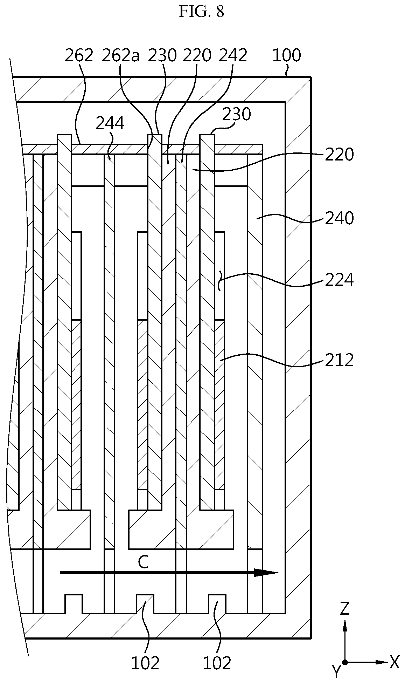

In FIG. 8, a cross-sectional view taken along line A-A' in FIG. 1 is shown.

As shown in FIG. 8, each insulating block 220 accommodated in the internal space of the module case 100 may be configured to support not only the connection member 230 electrically connected to the electrode lead 212 of the battery cell, but also the first circuit board 262 electrically connected to the connection member 230.

As described above, the extension portion 234 of the connection member 230 may extend upward and be inserted into the via hole 262a of the first circuit board 262.

A space for movement of a cooling liquid may be provided between the insulating block 220 and the first circuit board 262. The cooling liquid C introduced between the insulating block 220 and the first circuit board 262 may contact the electrode lead 212 and the connection member 230 through the opening portion 226 of the insulating block 220 to cool the electrode lead 212 and the connection member 230, and then may be moved through a moving passage provided by the cooling liquid channel 228 of the insulating block 220, the opening portion 242a of the cooling fin 242, the opening portion 244a of the insulating pad 244, and the opening portion 240a of the side plate 240 to be discharged to the outside of the battery module 10.

In an embodiment, the module case 100 may include a stopper 102 configured to protrude from the inner surface thereof and support the insulating block 220, thereby restricting movement of the insulating block 220. In this case, the stopper 102 may be located within the cooling liquid channel 228 of the insulating block 220 and configured to contact the inner surface of the cooling liquid channel 228. This stopper 102 may prevent a change in the position of the insulating block 220 due to vibration or external force applied to the battery module 10.

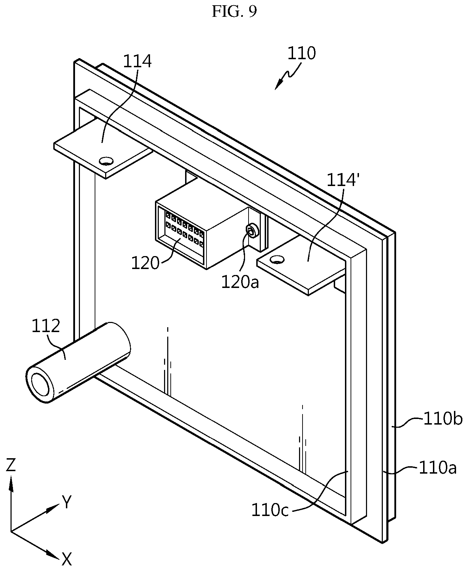

In FIG. 9, a first sealing cover 110 of an immersion-cooled battery module according to an embodiment of the present disclosure is shown in a perspective view.

As shown in FIG. 9, the first sealing cover 110 has an inlet 112 for introducing a cooling liquid into the internal space of the module case 100, and may be configured to be inserted into the opening of the module case 100 to airtightly cover the opening. To this end, the first sealing cover 110 may include a cover portion 110a, a fixing portion 110b, and a wall portion 110c.

The cover portion 110a may have the edge thereof in a form matching the opening of the module case 100 and may be configured to be inserted into the opening.

The fixing portion 110b may protrude from a first surface of the first sealing cover 110 (e.g., a first surface of the cover portion 110a) adjacent to the internal space of the module case 100 toward the internal space, and may be configured such that the edge thereof is attached and fixed to the inner surface of the module case 100. To this end, a sealing tape capable of double-sided adhesion may be attached to the edge surface of the fixing portion 110b facing the inner surface of the module case 100.

The wall portion 110c may protrude from a second surface of the first sealing cover 110 (e.g., a second surface of the cover portion 110a), which corresponds to the opposite surface of the first surface and faces the first end cover 130, and may be configured to face the opening edge of the module case 100 forming the opening at a predetermined distance. In this case, the wall portion 110c may be configured in the form of a loop that goes around the edge of the cover portion 110a.

As will be described again below, the wall portion 110c of the first sealing cover 110, together with the edge part of the cover portion 110a and the opening edge of the module case 100, may form a first insertion groove. The inner edge of the end cover 130 to be described later may be inserted into and coupled to this first insertion groove.

Meanwhile, on the second surface of the first sealing cover 110, high voltage (HV) terminals 114, 114' providing an output of the battery module 10 and a waterproof connector 120 may be disposed. In this case, the waterproof connector 120 may be fixed to the first sealing cover 110 by a fastening member 120a such as a bolt.

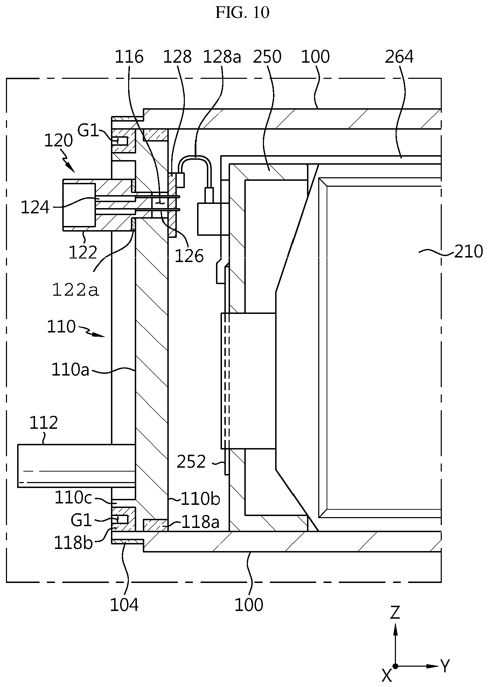

In FIG. 10, the first sealing cover 110 coupled to the module case 100 is shown in a vertical cross-sectional view.

As shown in FIG. 10, the first sealing cover 110 has an inlet 112 for introducing a cooling liquid into the internal space of the module case 100, and may be inserted into one end opening of the module case 100 to airtightly cover the opening.

To this end, the cover portion 110a of the first sealing cover 110 may be configured to have the edge thereof in a form matching the opening of the module case 100.

The fixing portion 110b of the first sealing cover 110 protrudes from the first surface of the cover portion 110a toward the internal space of the module case 100, and the edge thereof is attached and fixed to the inner surface of the module case 100.

To this end, a sealing tape 118a capable of double-sided adhesion may be attached to the edge surface of the fixing portion 110b facing the inner surface of the module case 100. In this case, the sealing tape 118a may have a multilayer structure in which an adhesive layer is respectively provided on both sides of a base layer made of a waterproof material.

For example, the base layer of the sealing tape 118a may include one or at least two material layers composed of one or at least two of polyimide, polypropylene, polyethylene, and polyethylene terephthalate. In addition, the adhesive layer of the sealing tape 118a may be composed of one or at least two of poly methyl methacrylate (PMMA), poly ethyl methacrylate (PEMA), and poly butyl methacrylate (PBMA).

In addition, the sealing tape 118a may further include a release paper covering the adhesive layer. This release paper may be removed by the operator just before the sealing tape 118a is attached.

The wall portion 110c of the first sealing cover 110 may protrude from a second surface of the first sealing cover 110, which is the opposite surface of the first surface adjacent to the internal space of the module case 100, in a direction away from the internal space of the 100, and may be configured to face the opening edge of the module case 100 forming the opening at a predetermined distance. As previously mentioned, the wall portion 110c may be configured in the form of a loop that goes around the edge of the cover portion 110a.

The wall portion 110c of the first sealing cover 110, together with the edge part of the cover portion 110a and the inner surface of the module case 100 forming the perimeter of the opening, may form a first insertion groove G1. A liquid sealant 118b, such as a sealing glue, may be applied to the inner surface of the first insertion groove G1.

In addition, a structural adhesive 104 with high shear strength may be applied to the outer surface of the opening edge of the module case 100. This structural adhesive 104 may include a polymer alloy adhesive or a polyimide adhesive. As will be described again below, the outer edge of the first end cover 130 to be described later may be attached and fixed to the outer surface of the opening edge to which the structural adhesive 104 is applied.

Meanwhile, the first sealing cover 110 may have a through hole 116 into which at least a portion of the waterproof connector 120 is inserted.

In addition, the waterproof connector 120 may include a connector body 122, a contact pin 124, and a connection pin 126.

The connector body 122 may be configured to be coupled to the second surface of the first surface of the first sealing cover 110 adjacent to the internal space of the module case 100 and the second surface of the first sealing cover 110 that is opposite to the first surface to cover the opening of the through hole 116 formed in the second surface. The connector body 122 of this waterproof connector 120 may be made of an insulating polymer synthetic resin, and may be fixed to the first sealing cover 110 by a fastening member such as a bolt.

In an embodiment, the waterproof connector 120 may further include a sealing member 122a interposed between the connector body 122 and the second surface of the first sealing cover 110 to seal the perimeter of the opening of the through hole 116. In this case, the sealing member 122a may include a sealant, a gasket, or both.

The contact pin 124 is supported by the connector body 122 and may be configured to extend in a direction away from the internal space of the module case 100. This contact pin 124 may be electrically connected by contacting a corresponding contact pin of a corresponding connector (not shown) connected to the waterproof connector 120. To this end, the contact pin 124 may be made of a metal material having conductivity. The waterproof connector 120 may include one or at least two such contact pins 124.

The connection pin 126 may be configured to be electrically connected to the contact pin 124 and extend from the connector body 122 toward the internal space of the module case 100 through the through hole 116, thereby being electrically connected to the second circuit board 264 among the plurality of circuit boards 262, 264, 266 accommodated in the module case 100. To this end, the connection pin 126 may be made of a metal material having conductivity. The waterproof connector 120 may include one or at least two such connection pins 126.

In an embodiment, the contact pin 124 and the connection pin 126 may be integrally formed. In addition, in an embodiment, the connector body 122 may be integrally formed with the contact pin 124 and the connection pin 126 through an insert molding process.

Meanwhile, the battery module 10 may further include a connection circuit board 128 and a cable 128a for electrical connection between the waterproof connector 120 and the second circuit board 264.

In this case, the connection circuit board 128 may be configured to be coupled to the first surface of the first sealing cover 110 adjacent to the internal space of the module case 100 to cover the other end opening of the through hole 116 formed in the first surface and be electrically connected to the connection pin 126. To this end, the connection circuit board 128 may have a via hole into which the connection pin 126 is inserted. The connection pin 126 inserted into the via hole of the connection circuit board 128 may be fixed to the connection circuit board 128 through a soldering process again.

The cable 128a may be configured such that one end is electrically connected to the connection circuit board 128 and the other end is electrically connected to the second circuit board 264. This cable 128a may include a flat flexible cable (FFC). In this way, the second circuit board 264 connected to the cable 128a may be electrically connected to the busbar 252 connected to the electrode lead of the battery cell 210. In this case, the busbar 252 may be coupled and fixed to the busbar frame 250.

For reference, as described with reference to FIGS. 1 and 2, the second sealing cover 110' covering the other end opening of the module case 100 has an outlet 112' for discharging the cooling liquid introduced into the internal space of the module case 100 and may be inserted into the other end opening to airtightly cover the other end opening. To this end, the second sealing cover 110' may include configurations corresponding to the cover portion 110a, the fixing portion 110b, and the wall portion 110c of the first sealing cover 110, respectively. However, configurations corresponding to the HV terminals 114, 114' or the waterproof connector 120 are not disposed in the second sealing cover 110'.

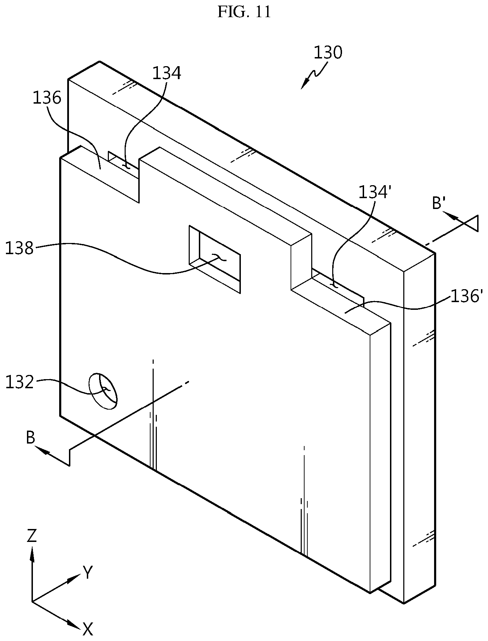

In FIG. 11, a first end cover 130 of an immersion-cooled battery module according to an embodiment of the present disclosure is shown in a perspective view.

As shown in FIG. 11, the first end cover 130 may be configured to be coupled to an opening of the module case 100 into which the first sealing cover 110 is inserted to cover the corresponding opening. This first end cover 130 may include an inlet hole 132 through which the inlet 112 of the first sealing cover 110 passes and a connector hole 138 into which at least a portion of the waterproof connector 120 is inserted and exposed to the outside.

In addition, the first end cover 130 may further include terminal holes 134, 134' through which the HV terminals 114, 114' disposed in the first sealing cover 110 pass, and support portions 136, 136' for supporting ends of the HV terminals 114, 114' extending outward through these terminal holes 134, 134'.

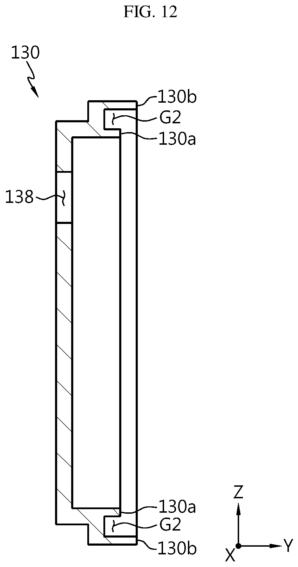

In FIG. 12, a vertical cross-sectional view taken along line B-B' of the first end cover shown in FIG. 11 is shown.

As shown in FIG. 12, the first end cover 130 may have a cap structure that covers the opening of the module case 100 into which the first sealing cover 110 is inserted. In addition, at least a part of the edge portion of the first end cover 130 may be configured to be inserted and coupled between the opening edge of the module case 100 and the wall portion 110c of the first sealing cover 110. In this case, the first end cover 130 may include a body covering the opening, and an inner edge 130a and an outer edge 130b extending from the body.

The inner edge 130a may extend from the body of the first end cover 130 toward the internal space of the module case 100 and be inserted between the opening edge of the module case 100 and the wall portion 110c of the first sealing cover 110. That is, the inner edge 130a may be configured to be inserted into the first insertion groove G1 formed by the opening edge of the module case 100, the edge portion of the first sealing cover 110, and the wall portion 110c.

The outer edge 130b may extend toward the outer surface of the module case 100 and be attached to the outer surface portion to which the structural adhesive 104 is applied.

In addition, the inner edge 130a and the outer edge 130b may be spaced apart from each other at a predetermined distance to form a second insertion groove G2 into which the opening edge of the module case 100 is inserted.

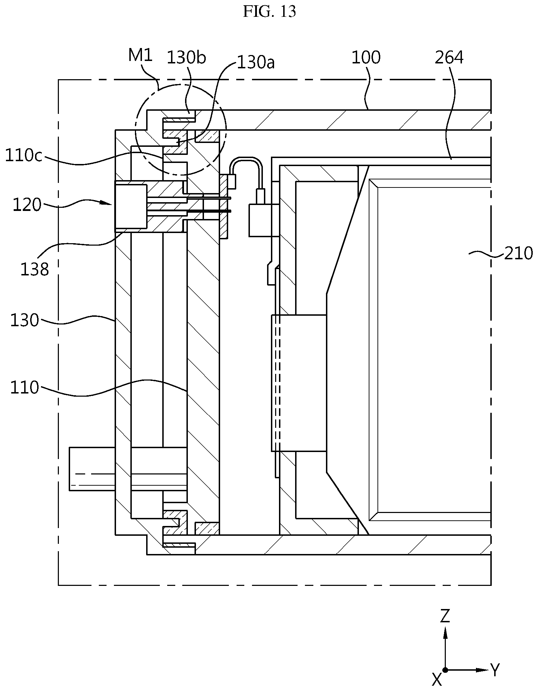

In FIG. 13, the first end cover 130 coupled to the module case 100 is shown in a vertical cross-sectional view.

As shown in FIG. 13, the inner edge 130a of the first end cover 130 may extend from the body of the first end cover 130 toward the internal space of the module case 100 and be inserted between the opening edge of the module case 100 and the wall portion 110c of the first sealing cover 110. That is, the inner edge 130a may be configured to be inserted into the first insertion groove G1 formed by the opening edge of the module case 100, the edge portion of the first sealing cover 110, and the wall portion 110c.

In addition, the outer edge 130b of the first end cover 130 may extend toward the outer surface of the module case 100 and be attached to the outer surface portion to which the structural adhesive is applied.

In addition, the opening edge of the module case 100 may be inserted and coupled between the inner edge 130a and the outer edge 130b of the first end cover 130. That is, the opening edge of the module case 100 may be inserted and coupled to the second insertion groove G2 formed between the inner edge 130a and the outer edge 130b.

Meanwhile, the end portion of the waterproof connector 120 may be inserted into and supported by the connector hole 138 of the first end cover 130.

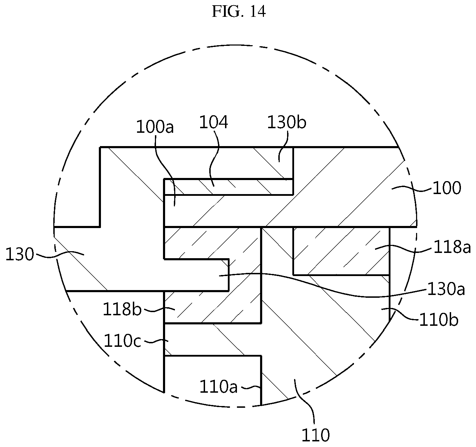

In FIG. 14, portion M1 of FIG. 13 is shown in an enlarged view.

As shown in FIG. 14, the inner edge 130a of the first end cover 130 may extend toward the internal space of the module case 100 and may be inserted into and coupled to the first insertion hole G1 formed between the opening edge 100a of the module case 100 and the wall portion 110c of the first sealing cover 110. In this case, the first insertion hole G1 may be filled with a liquid sealant 118b. As a result, the liquid sealant 118b may be interposed between the inner edge 130a of the first end cover 130 and the wall portion 110c of the first sealing cover 110. In addition, the liquid sealant 118b may also be interposed between the inner edge 130a of the first end cover 130 and the opening edge 100a of the module case 100.

The outer edge 130b of the first end cover 130 may extend toward the outer surface of the opening edge 100a and be attached to the outer surface of the opening edge 100a to which the structural adhesive 104 is applied.

Meanwhile, the opening edge 100a of the module case 100 may be inserted into and coupled to the second insertion groove formed between the inner edge 130a and the outer edge 130b of the first end cover 130. As a result, a liquid sealant 118b may be interposed between the inner edge 130a and the inner surface of the opening edge 100a, while a structural adhesive 104 may be interposed between the outer edge 130b and the outer surface of the opening edge 100a.

In this way, the inner edge 130a of the first end cover 130 is inserted and coupled between the wall portion 110c of the first sealing cover 110 and the opening edge 100a of the module case 100, and the opening edge 100a of the module case 100 is inserted and coupled between the inner edge 130a and the outer edge 130b of the first end cover 130, thereby forming a meander-shaped sealing structure, which may result in minimizing the risk of leakage of the cooling liquid introduced into the battery module 10.

In addition, the sealing tape 118a, liquid sealant 118b, and structural adhesive 104 applied to the sealing structure of the battery module 10 may triply block leakage of the cooling liquid, thereby improving the durability and safety of the immersion-cooled battery module 10.

For reference, as described with reference to FIGS. 1 and 2, the second end cover 130', which covers the other end opening of the module case 100 together with the second sealing cover 110', has an outlet hole through which the outlet 112' of the second sealing cover 110' passes, and may cover the other end opening into which the second sealing cover 110' is inserted. To this end, the second end cover 130' may include configurations corresponding to the inner edge 130a and the outer edge 130b of the first end cover 130. On the other hand, the second end cover 130' does not include configurations corresponding to terminal holes 134, 134' or connector holes 138 of the first end cover 130.

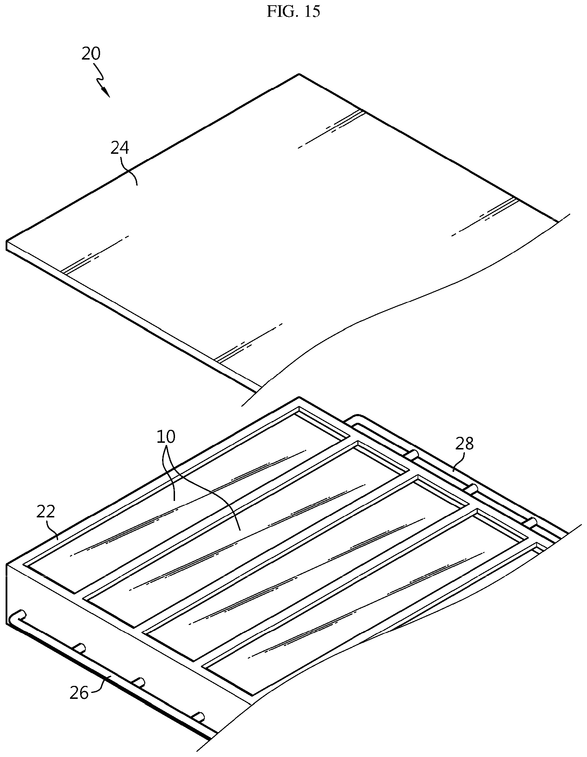

FIG. 15 shows a battery pack 20 according to an embodiment of the present disclosure.

As shown in FIG. 15, a battery pack 20 according to an embodiment of the present disclosure may include a battery module 10 according to the present disclosure, and a pack case 22, 24 accommodating one or at least two of these battery modules 10. The pack case 22, 24 may have a plurality of seating spaces for accommodating and seating a plurality of battery modules.

In addition, the battery pack 20 may further include a supply pipe 26 for supplying a cooling liquid to the battery module 10 and a return pipe 28 for recovering the cooling liquid discharged from the battery module 10. Although not shown in FIG. 15, the battery pack 20 may further include a cooling liquid tank for storing a cooling liquid, a pump for circulating the cooling liquid stored in the cooling liquid tank through the supply pipe 26 and the return pipe 28, and a chiller for removing heat from the cooling liquid recovered through the return pipe 28.

In addition, the battery pack 20 may further include various electrical components (not shown) that controls the charging and discharging operation of the battery module 10 accommodated in the pack case 22, 24, or monitors the state of charge (SOC), the state of health (SOH), and the like. These electrical components may be accommodated in the pack case 22, 24 together with the battery module 10.

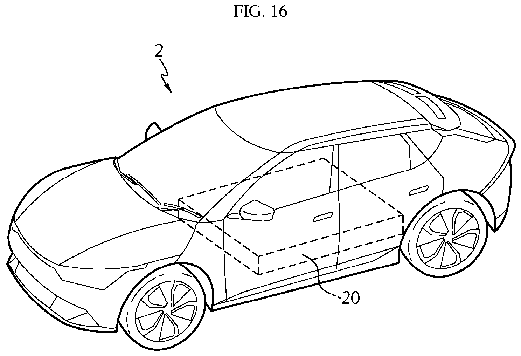

FIG. 16 shows a vehicle 2 according to an embodiment of the present disclosure.

As shown in FIG. 16, the vehicle 2 according to an embodiment of the present disclosure may include one or at least two battery modules 10 according to any one of the various embodiments described above, or may include at least one battery pack 20 including such battery modules 10.

As such, the battery module 10 or battery pack 20 applied to the vehicle 2 may provide electrical energy required for various operations of the vehicle 2.

For reference, it is a matter of course that the battery module according to the present disclosure may be applied to an energy storage system (ESS) or various electrical devices in addition to a vehicle.

As described above, according to the present disclosure, the battery cells accommodated inside the module case of the battery module may be cooled through direct contact with the cooling liquid introduced into the module case, thereby omitting the battery cell cooling means such as a thermal pad, a heat sink, and the like, improving the battery cell cooling performance, and effectively preventing thermal runaway of the battery cell.

In addition, in the event of a fire caused by thermal runaway of a battery cell, the cooling liquid charged inside the module case may function as a fire extinguishing agent, thereby preventing a series of thermal runaway of other battery cells or other battery modules around the battery cell where thermal runaway occurred.

In addition, a pair of battery cells are disposed side by side in the longitudinal direction of the battery cell with an insulating block interposed therebetween to form a battery unit, a plurality of battery units are stacked in the thickness direction of the battery cell to form a unit stack, and a plurality of unit stacks are stacked again in the thickness direction to form a battery module having a length more than twice as long as that of the corresponding battery cell, thereby reducing the number of battery modules included in the battery pack and smoothly moving the cooling liquid along the longitudinal direction in each battery module. As a result, in a battery pack including multiple battery modules, the space occupied by the inlet and outlet provided for each battery module and the space occupied by the pipes required to supply a cooling liquid to and recover it from each battery module are reduced, so that it may not only reduce the manufacturing cost of the battery pack, but also lower the overall volume and weight of the battery pack and improve the energy density of the battery pack.

In addition, the insulating blocks included in the mutually stacked battery units may be configured to bring the connection member into contact with the cooling liquid while supporting the connection member connected to the electrode lead of the battery cell, thereby increasing the cooling effect on the electrode lead portion of the battery cell having relatively severe heat generation.

In addition, the insulating blocks may have a cooling liquid channel that provides a moving passage for the cooling liquid, thereby facilitating circulation of the cooling liquid and further improving cooling performance for the battery cell.

In addition, one circuit board of the plurality of circuit boards sensing the electrical signals of the battery cells inside the battery module may transmit the electrical signal sensed by itself and the electrical signal sensed by the remaining circuit boards to the outside through one waterproof connector, thereby facilitating the electrical connection between the battery module and external electrical devices and simplifying the wiring structure of the battery pack including multiple battery modules.

In addition, the waterproof connector is coupled to a sealing cover provided with an inlet or outlet and disposed in a space secured to connect the inlet or outlet to the pipe, so that there is no need to secure a separate space to enable the electrical connection work of the waterproof connector within the battery pack, and the electrical connection work of the waterproof connector may be facilitated.

In addition, the inner edge of the end cover is inserted and coupled between the wall portion of the sealing cover and the opening edge of the module case, and the opening edge of the module case is inserted and coupled between the inner edge and the outer edge of the end cover, thereby forming a meander-shaped sealing structure, which may result in minimizing the risk of leakage of the cooling liquid introduced into the battery module.

In addition, the sealing tape, liquid sealant, and structural adhesive applied to the sealing structure may triply block leakage of the cooling liquid, thereby improving the durability and safety of the immersion-cooled battery module.

Furthermore, it is a matter of course that embodiments according to the present disclosure may solve various other technical problems in addition to those mentioned in this specification in related technical fields as well as in the relevant technical field.

The present disclosure has been described hereinabove with reference to specific embodiments. However, it will be clearly understood to those skilled in the art that various modified embodiments may be implemented within the technical scope of the present disclosure. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

## Claims

1. An immersion-cooled battery module (10) comprising:
a battery assembly (200) comprising a plurality of battery units (BU);
a module case (100) extending in a first direction, having an opening at least at one end in the first direction, and accommodating the battery assembly (200) and a cooling liquid in an internal space connected to the opening; and
a sealing cover (110, 110') airtightly covering the opening,
wherein each of the plurality of battery units (BU) comprises:
a plurality of battery cells (210) disposed side by side in the first direction;
an insulating block (220) disposed between adjacent battery cells among the plurality of battery cells (210); and
a connection member (230) coupled to the insulating block (220) and electrically connected to electrode leads (212) of the adjacent battery cells (210);
**characterized in that**
the plurality of battery units (BU) are stacked on each other in a second direction crossing the first direction with plate-shaped cooling fins (242) or insulating pads (244) interposed therebetween.

2. The immersion-cooled battery module (10) according to claim 1,
wherein each of the adjacent battery cells (210) is provided with electrode leads (212) at both ends in the first direction.

3. The immersion-cooled battery module (10) according to claim 1,
wherein the battery assembly (200) comprises a plurality of unit stacks (US) in which two or more battery units (BU) among the plurality of battery units (BU) are configured to be stacked on each other with the cooling fins (242) interposed therebetween,
wherein the plurality of unit stacks comprised in the battery assembly (200) are configured to be stacked on each other with the insulating pads (244) interposed therebetween.

4. The immersion-cooled battery module (10) according to claim 1,
wherein the insulating block (220) comprises:
a coupling groove (222) configured such that the connection member (230) is inserted and coupled; and
a plurality of slots (224) communicating with the internal space of the coupling groove (222) and configured such that electrode leads (212) of the adjacent battery cells (210) are inserted.

5. The immersion-cooled battery module (10) according to claim 4,
wherein the insulating block (220) further has an opening portion (226) configured to open an internal space of the coupling groove (222) to bring at least a portion of the connection member (230) coupled to the coupling groove (222) into contact with a cooling liquid.

6. The immersion-cooled battery module (10) according to claim 1,
wherein the insulating block (220) has a cooling liquid channel (228) provided on one surface in contact with the inner surface of the module case (100) to provide a moving passage for the cooling liquid.

7. The immersion-cooled battery module (10) according to claim 1,
wherein the battery assembly (200) further comprises a circuit board (260) configured to sense electrical signals related to battery cells (210) comprised in the plurality of battery units (BU).

8. The immersion-cooled battery module (10) according to claim 7,
wherein the insulating block (220) comprises a support portion (228a) that supports the circuit board (260) so that the circuit board (260) is positioned spaced apart from the battery cells (210) and allows the cooling liquid to move between the circuit board (260) and the battery cells (210).

9. The immersion-cooled battery module (10) according to claim 7,
wherein the connection member (230) comprises:
a body portion (232) electrically connected to electrode leads (212) of the adjacent battery cells (210); and
an extension portion (234) that extends from one end of the body portion (232) and is inserted into a via hole (262a) provided in the circuit board (260) to be electrically connected to the circuit board (260).

10. The immersion-cooled battery module (10) according to claim 1,
wherein the battery assembly (200) comprises a pair of side plates (240) each in close contact with both ends in the second direction of the plurality of battery units (BU) stacked in the second direction,
wherein each of the pair of side plates (240) comprises a first opening portion (240a) provided at one end in contact with the inner surface of the module case (100) to provide a moving passage for the cooling liquid.

11. The immersion-cooled battery module (10) according to claim 10,
wherein at least one of the pair of side plates (240) further comprises a second opening portion (240b) that exposes a surface of a battery cell (210) comprised in an adjacent battery unit (BU) among the plurality of battery units (BU) to contact a cooling liquid.

12. A battery pack comprising an immersion-cooled battery module (10) according to any one of claims 1 to 11.

13. A vehicle comprising an immersion-cooled battery module (10) according to any one of claims 1 to 11.

## Patentansprüche

1. Immersionsgekühltes Batteriemodul (10), umfassend:
eine Batterieanordnung (200), welche eine Mehrzahl von Batterieeinheiten (BU) umfasst,
ein Modulgehäuse (100), welches sich in einer ersten Richtung erstreckt, welches in der ersten Richtung eine Öffnung an wenigstens einem Ende aufweist und welches die Batterieanordnung (200) und eine Kühlflüssigkeit in einem inneren Raum aufnimmt, welcher mit der Öffnung verbunden ist; und
eine Dichtungsabdeckung (110, 110'), welche die Öffnung luftdicht abdeckt,
wobei jede aus der Mehrzahl von Batterieeinheiten (BU) umfasst:
eine Mehrzahl von Batteriezellen (210), welche in der ersten Richtung nebeneinander angeordnet sind;
einen isolierenden Block (220), welcher zwischen benachbarten Batteriezellen unter der Mehrzahl von Batteriezellen (210) angeordnet ist; und
ein Verbindungselement (230), welches mit dem isolierenden Block (220) gekoppelt ist und mit Elektrodenleitungen (212) der benachbarten Batteriezellen (210) elektrisch verbunden ist;
**dadurch gekennzeichnet, dass** die Mehrzahl von Batterieeinheiten (BU) in einer zweiten Richtung, welche die erste Richtung kreuzt, mit plattenförmigen Kühlrippen (242) oder isolierenden Pads (244), welche dazwischen eingefügt sind, aufeinander gestapelt sind.

2. Immersionsgekühltes Batteriemodul (10) nach Anspruch 1,
wobei jede der benachbarten Batteriezellen (210) in der ersten Richtung mit Elektrodenleitungen (212) an beiden Enden bereitgestellt ist.

3. Immersionsgekühltes Batteriemodul (10) nach Anspruch 1,
wobei die Batterieanordnung (200) eine Mehrzahl von Einheitsstapeln (US) umfasst, in welchen zwei oder mehr Batterieeinheiten (BU) unter der Mehrzahl von Batterieeinheiten (BU) dazu eingerichtet sind, mit plattenförmigen Kühlrippen (242), welche dazwischen eingefügt sind, aufeinander gestapelt zu sein,
wobei die Mehrzahl von Einheitsstapeln, welche in der Batterieanordnung (200) umfasst sind, dazu eingerichtet sind, mit isolierenden Pads (244), welche dazwischen eingefügt sind, aufeinander gestapelt zu sein.

4. Immersionsgekühltes Batteriemodul (10) nach Anspruch 1,
wobei der isolierende Block (220) umfasst:
eine Kopplungsnut (222), welche derart eingerichtet ist, dass das Verbindungselement (230) eingeführt und gekoppelt ist; und
eine Mehrzahl von Spalten (224), welche mit dem inneren Raum der Kopplungsnut (222) kommunizieren und derart eingerichtet sind, dass die Elektrodenleitungen (212) der benachbarten Batteriezellen (210) eingeführt sind.

5. Immersionsgekühltes Batteriemodul (10) nach Anspruch 4,
wobei der isolierende Block (220) ferner einen Öffnungsabschnitt (226) aufweist, welcher dazu eingerichtet ist, einen inneren Raum der Kopplungsnut (222) zu öffnen, um wenigstens einen Abschnitt des Verbindungselements (230), welcher mit der Kopplungsnut (222) gekoppelt ist, in Kontakt mit einer Kühlflüssigkeit zu bringen.

6. Immersionsgekühltes Batteriemodul (10) nach Anspruch 1,
wobei der isolierende Block (220) einen Kühlflüssigkeitskanal (228) aufweist, welcher an einer Fläche in Kontakt mit der inneren Fläche des Modulgehäuses (100) bereitgestellt ist, um einen Bewegungsdurchgang für die Kühlflüssigkeit bereitzustellen.

7. Immersionsgekühltes Batteriemodul (10) nach Anspruch 1,
wobei die Batterieanordnung (200) ferner eine Schaltplatte (260) umfasst, welche dazu eingerichtet ist, elektrische Signale zu messen, welche die Batteriezellen (210) betreffen, welche in der Mehrzahl von Batterieeinheiten (BU) umfasst sind.

8. Immersionsgekühltes Batteriemodul (10) nach Anspruch 7,
wobei der isolierende Block (220) einen Halterungsabschnitt (228a) umfasst, welcher die Schaltplatte (260) haltert, so dass die Schaltplatte (260) von den Batteriezellen (210) beabstandet positioniert ist und der Kühlflüssigkeit ermöglicht, sich zwischen der Schaltplatte (260) und den Batteriezellen (210) zu bewegen.

9. Immersionsgekühltes Batteriemodul (10) nach Anspruch 7,
wobei das Verbindungselement (230) umfasst:
einen Körperabschnitt (232), welcher mit Elektrodenleitungen (212) der benachbarten Batteriezellen (210) elektrisch verbunden ist; und
einen Erstreckungsabschnitt (234), welcher sich von einem Ende des Körperabschnitts (232) erstreckt und in ein Durchgangsloch (262a) eingeführt ist, welches in der Schaltplatte (260) bereitgestellt ist, um elektrisch mit der Schaltplatte (260) verbunden zu sein.

10. Immersionsgekühltes Batteriemodul (10) nach Anspruch 1,
wobei die Batterieanordnung (200) ein Paar von Seitenplatten (240) umfasst, welche jeweils in der zweiten Richtung in engem Kontakt mit beiden Enden der Mehrzahl von Batterieeinheiten (BU) sind, welche in der zweiten Richtung gestapelt sind,
wobei jede aus dem Paar von Seitenplatten (240) einen ersten Öffnungsabschnitt (240a) umfasst, welcher an einem Ende in Kontakt mit der inneren Fläche des Modulgehäuses (100) bereitgestellt ist, um einen Bewegungsdurchgang für die Kühlflüssigkeit bereitzustellen.

11. Immersionsgekühltes Batteriemodul (10) nach Anspruch 10,
wobei wenigstens eine aus dem Paar von Seitenplatten (240) ferner einen zweiten Öffnungsabschnitt (240b) umfasst, welcher eine Fläche einer Batteriezelle (210) freilegt, welche in einer benachbarten Batterieeinheit (BU) unter der Mehrzahl von Batterieeinheiten (BU) umfasst ist, um eine Kühlflüssigkeit zu kontaktieren.

12. Batteriepack, umfassend ein immersionsgekühltes Batteriemodul (10) nach einem der Ansprüche 1 bis 11.

13. Fahrzeug, umfassend ein immersionsgekühltes Batteriemodul (10) nach einem der Ansprüche 1 bis 11.

## Revendications

1. Module de batterie refroidi par immersion (10) comprenant :
un ensemble batterie (200) comprenant plusieurs unités de batterie (BU) ;
un boîtier de module (100) s'étendant dans une première direction, ayant une ouverture au moins à une extrémité dans la première direction, et recevant l'ensemble batterie (200) et un liquide de refroidissement dans un espace interne relié à l'ouverture ; et
un couvercle d'étanchéité (110, 110') recouvrant hermétiquement l'ouverture,
dans lequel chacune de la pluralité d'unités de batterie (BU) comprend :
une pluralité de cellules de batterie (210) disposées côte à côte dans la première direction ;
un bloc isolant (220) disposé entre des cellules de batterie adjacentes parmi la pluralité de cellules de batterie (210) ; et
un élément de connexion (230) couplé au bloc isolant (220) et connecté électriquement aux conducteurs d'électrode (212) des cellules de batterie (210) adjacentes ;
**caractérisé en ce que** la pluralité d'unités de batterie (BU) sont empilées les unes sur les autres dans une deuxième direction croisant la première direction avec des ailettes de refroidissement (242) en forme de plaque ou des tampons isolants (244) interposés entre celles-ci.

2. Module de batterie refroidi par immersion (10) selon la revendication 1,
dans lequel chacune des cellules de batterie (210) adjacentes est dotée de conducteurs d'électrode (212) aux deux extrémités dans la première direction.

3. Module de batterie refroidi par immersion (10) selon la revendication 1,
dans lequel l'ensemble batterie (200) comprend une pluralité d'empilements d'unités (US) dans lesquels deux unités de batterie (BU) ou plus parmi la pluralité d'unités de batterie (BU) sont configurées pour être empilées les unes sur les autres avec les ailettes de refroidissement (242) interposées entre celles-ci,
dans lequel la pluralité d'empilements d'unités compris dans l'ensemble batterie (200) sont configurés pour être empilés les uns sur les autres avec les tampons isolants (244) interposés entre ceux-ci.

4. Module de batterie refroidi par immersion (10) selon la revendication 1,
dans lequel le bloc isolant (220) comprend :
une rainure de couplage (222) configurée de sorte que l'élément de connexion (230) soit inséré et couplé ; et
une pluralité de fentes (224) communiquant avec l'espace interne de la rainure de couplage (222) et configurées de sorte que des conducteurs d'électrode (212) des cellules de batterie (210) adjacentes soient insérés.

5. Module de batterie refroidi par immersion (10) selon la revendication 4,
dans lequel le bloc isolant (220) a en outre une partie d'ouverture (226) configurée pour ouvrir un espace interne de la rainure de couplage (222) pour mettre au moins une partie de l'élément de connexion (230) couplé à la rainure de couplage (222) en contact avec un liquide de refroidissement.

6. Module de batterie refroidi par immersion (10) selon la revendication 1,
dans lequel le bloc isolant (220) a un canal de liquide de refroidissement (228) prévu sur une surface en contact avec la surface intérieure du boîtier de module (100) pour fournir un passage de déplacement au liquide de refroidissement.

7. Module de batterie refroidi par immersion (10) selon la revendication 1,
dans lequel l'ensemble batterie (200) comprend en outre une carte de circuit imprimé (260) configurée pour détecter des signaux électriques liés aux cellules de batterie (210) comprises dans la pluralité d'unités de batterie (BU).

8. Module de batterie refroidi par immersion (10) selon la revendication 7,
dans lequel le bloc isolant (220) comprend une partie de support (228a) qui supporte la carte de circuit imprimé (260) de telle façon que la carte de circuit imprimé (260) soit positionnée à distance des cellules de batterie (210) et permet au liquide de refroidissement de se déplacer entre la carte de circuit imprimé (260) et les cellules de batterie (210).

9. Module de batterie refroidi par immersion (10) selon la revendication 7,
dans lequel l'élément de connexion (230) comprend :
une partie corps (232) connectée électriquement aux conducteurs d'électrode (212) des cellules de batterie (210) adjacentes ; et
une partie d'extension (234) qui s'étend à partir d'une extrémité de la partie corps (232) et est insérée dans un trou d'interconnexion (262a) prévu dans la carte de circuit imprimé (260) pour être connectée électriquement à la carte de circuit imprimé (260).

10. Module de batterie refroidi par immersion (10) selon la revendication 1,
dans lequel l'ensemble batterie (200) comprend une paire de plaques latérales (240) chacune en contact étroit avec les deux extrémités dans la deuxième direction de la pluralité d'unités de batterie (BU) empilées dans la deuxième direction,
dans lequel chacune de la paire de plaques latérales (240) comprend une première partie d'ouverture (240a) prévue à une extrémité en contact avec la surface intérieure du boîtier de module (100) pour fournir un passage de déplacement au liquide de refroidissement.

11. Module de batterie refroidi par immersion (10) selon la revendication 10,
dans lequel au moins une parmi la paire de plaques latérales (240) comprend en outre une seconde partie d'ouverture (240b) qui expose une surface d'une cellule de batterie (210) comprise dans une unité de batterie (BU) adjacente parmi la pluralité d'unités de batterie (BU) pour qu'elle entre en contact avec un liquide de refroidissement.

12. Bloc-batterie comprenant un module de batterie refroidi par immersion (10) selon l'une quelconque des revendications 1 à 11.

13. Véhicule comprenant un module de batterie refroidi par immersion (10) selon l'une quelconque des revendications 1 à 11.
